# EUROPEAN PATENT SPECIFICATION

(11) **EP 1 542 118 B1**
(45) Date of publication and mention of the grant of the patent: **19.07.2006**
(21) Application number: 04023830.5
(22) Date of filing: 06.10.2004
(51) Int. Cl.: G06F 1/16

(54) **Hybrid mobile terminal and method for controlling the same**
Hybrides mobiles Endgerät und dazugehöriges Steurungsverfahren
Terminal mobile hybride et procédé de commande de celui-ci

(30) Priority: 10.12.2003 KR 2003089736
(43) Date of publication of application: 15.06.2005
(73) Proprietor: SAMSUNG ELECTRONICS CO., LTD., Suwon-si, Gyeonggi-do (KR)
(72) Inventor: Shin, Yeung-Seob, Yeongtong-gu, Suwon-si, Gyeonggi-do (JP)
(74) Representative: Grünecker, Kinkeldey, Stockmair & Schwanhäusser Anwaltssozietät

(56) References cited:
- EP-A- 1 263 191
- WO-A-01/61872

## Description

The present invention relates generally to a hybrid mobile terminal, and more particularly to a hybrid mobile terminal and method for controlling a display thereof.

Conventionally, a hybrid mobile terminal, sometimes called a Smart phone, has been comprised of a mobile phone section for executing a communication function and a PDA (Personal Digital Assistant) section for executing a computing function.

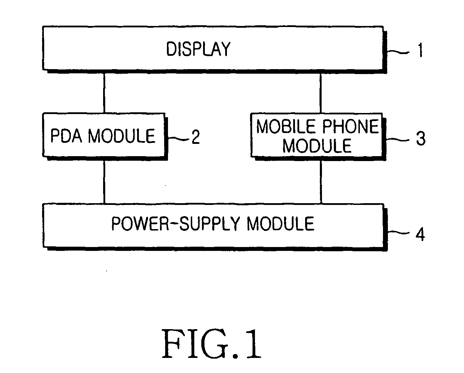

FIG. 1 is a block diagram illustrating a conventional hybrid mobile terminal. Referring to FIG. 1, a conventional hybrid mobile terminal includes a display 1 for displaying a variety of operation states, a PDA module 2 for executing common PDA functions, a mobile phone module 3 for executing wireless communication functions, and a power-supply module 4 for providing a power-supply voltage to each of the above modules 1, 2, and 3. For the convenience of description, a key entry unit, a speaker, and a microphone commonly contained in a general mobile terminal are not illustrated in FIG. 1.

The aforementioned hybrid mobile terminal performs PDA functions and mobile phone functions using a single mobile terminal, such that it can provide users with more convenient services. Additionally, the conventional hybrid mobile terminal can control the PDA module and the mobile phone module to selectively enter a sleep mode, such that it can implement a power-saving function.

Commonly, the hybrid mobile terminal can be configured in the form of a bar type or a flip type. There has recently been developed a new hybrid mobile terminal including two displays. Similar to a mobile terminal having typical two displays, the aforementioned hybrid mobile terminal including two displays controls either one of two displays (e.g., an external display) to continuously display specific display information to be frequently checked by users, for example, an icon indicating antenna reception sensitivity, a time readout, time indication data for indicating the remaining battery charge, etc.

The external display of the aforementioned two displays contained in the hybrid mobile terminal is controlled by a mobile phone. More specifically, although an OS (Operating System) of the PDA module of the hybrid mobile terminal enters a sleep mode to increase a remaining battery power in an embedded system, the external display can display a variety of information provided from the mobile phone module in the sleep mode.

The external display has a disadvantage in that it can display only information associated with the mobile phone module upon receiving a control signal from the mobile phone module. That is, if the external display is controlled by the PDA module, it is unable to display any information in the sleep mode of the PDA module.

Therefore, if the external display is controlled by the PDA module when the conventional hybrid mobile terminal includes two displays, the external display can display information received from a User Interface (UI) of the PDA module, but the PDA module must be woken up from the sleep mode when information displayed on the external display is updated during the sleep mode of the PDA module, resulting in increased battery consumption. Further, if the hybrid mobile terminal including two displays controls the external display using the mobile phone module, the external display is unable to display information received from the User Interface of the PDA module, and can only display information associated with the mobile phone module. An example is disclosed in document EP-A-1 263 191.

Therefore, the present invention has been designed in view of the above and other problems, and it is the object of the present invention to provide a hybrid mobile terminal for displaying information on a display, and a method for controlling the same.

This object is solved by the invention as claimed in the independent claims.

Preferred embodiments are defined in the dependent claims.

In accordance with one aspect of the present invention, the above and other objects can be accomplished by a hybrid mobile terminal that integrates a PDA (Personal Digital Assistant) module including a display, with a mobile phone module. The hybrid mobile terminal includes the mobile phone module for including display data in an indicator of an interrupt signal when the display data occurs in the display of the PDA module, and transmitting the interrupt signal including the display data to the PDA module. Additionally, the hybrid mobile terminal includes the PDA module for analyzing the indicator contained in the interrupt signal, determining whether the analyzed interrupt signal is an interrupt signal for displaying data on the display, and displaying display data on the display according to indicator contents if the analyzed interrupt signal is the interrupt signal for displaying data on the display.

In accordance with another aspect of the present invention, there is provided a method for controlling a display for use in a hybrid mobile terminal in which a PDA (Personal Digital Assistant) module including a display is integrated with a mobile phone module. The method includes adding display data in an indicator of an interrupt signal when the display data occurs in the display of the PDA module, and transmitting the interrupt signal including the display data to the PDA module, analyzing the indicator contained in the interrupt signal when the PDA module receives the interrupt signal from the mobile phone module in a sleep mode, and determining whether the analyzed interrupt signal is an interrupt signal for displaying data on the display, and displaying display data on the display according to indicator contents if the analyzed interrupt signal is the interrupt signal for displaying data on the display.

The above and other features and advantages of the present invention will be more clearly understood from the following detailed description taken in conjunction with the accompanying drawings, in which:
FIG. 1 is a block diagram illustrating a conventional hybrid mobile terminal;
FIG. 2 is a block diagram illustrating a hybrid mobile terminal in accordance with a preferred embodiment of the present invention;
FIG. 3 is a flow chart illustrating a procedure for controlling a display included in the hybrid mobile terminal in accordance with a preferred embodiment of the present invention; and
FIG. 4 is a conceptual diagram illustrating a procedure for operating a hybrid mobile terminal in accordance with a preferred embodiment of the present invention.

Preferred embodiments of the present invention will be described in detail herein below with reference to the annexed drawings. In the drawings, the same or similar elements are denoted by the same reference numerals even though they are depicted in different drawings. Additionally, in the following description, a detailed description of known functions and configurations incorporated herein will be omitted when it may obscure the subject matter of the present invention.

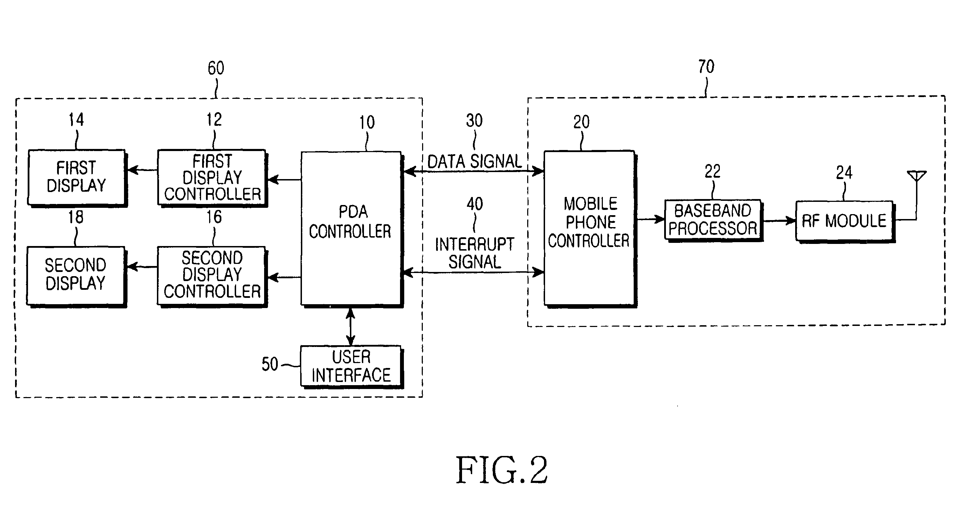

FIG. 2 is a block diagram illustrating a hybrid mobile terminal in accordance with a preferred embodiment of the present invention. Referring to FIG. 2, the hybrid mobile terminal includes a PDA module 60 for controlling a PDA function and a mobile phone module 70 for controlling a mobile phone function. The PDA module 60 is connected to the mobile phone module 70 over an I2C bus. As is known in the art, the I2C bus is a synchronous bi-directional two-wire bus including a data signal line 30 and an interrupt signal line 40. In the present invention, the PDA module 60 and the mobile phone module 70 have individual unique addresses. The PDA module 60 and the mobile phone each can act as a receiver and a transmitter.

The PDA module 60 includes a first display controller 12 and a first display 14 for displaying various data upon receiving a control signal from the first display controller 12. The PDA module 60 also includes a second display controller 16 and a second display 18 for displaying various data upon receiving a control signal from the second display controller 16. A PDA controller 10 provides the first and second display controllers 12 and 16 with various display data, such that the display data can be displayed on the first and second displays 14 and 18.

For example, the first display 14 and the second display 18 can be an internal display and an external display, respectively, for use in a folder-type hybrid mobile terminal. As such, the second display 18 displays a variety of information received from the mobile phone module 70, for example, antenna reception intensity, a remaining battery power of the hybrid mobile terminal, time data, etc. Additionally, the second display 18 may display a Short Message Service (SMS) message of the mobile phone module 70, a caller phone number, etc. The first display 14 and the second display 18 are implemented in the PDA module 60, such that the PDA controller 10 can display data received from the user interface 50 of the PDA module 60 on the displays 14 and 18.

The mobile phone 70 includes a mobile phone controller 20, a baseband processor 22, and an RF (Radio Frequency) module 24. The mobile phone controller 20 performs overall control operations of the mobile phone module 70. The RF module 24 transmits/receives an RF signal to/from a base station over an antenna, converts the received RF signal into an IF (Intermediate Frequency) signal, and outputs the IF signal to the baseband processor 22. The RF module 24 converts the IF signal received from the baseband processor 22 into the RF signal, and transmits the RF signal. The baseband processor 22 is preferably a BAA (Baseband Analog ASIC) that interfaces the mobile phone controller 20 with the RF module 24, converts a digital baseband signal received from the controller 20 into an analog IF signal, transmits the analog IF signal to the RF module 24, converts the analog IF signal received from the RF module 24 into the baseband digital signal, and transmits the baseband digital signal to the controller 20. The data signal line 30 for transmitting/receiving a data signal and the interrupt signal line 40 for transmitting/receiving an interrupt signal are positioned between the PDA module 60 and the mobile phone module 70. Preferably, the data signal line 30 and the interrupt signal line 40 are physically implemented in the form of a single line. However, the data signal line 30 and the interrupt signal line 40 can also be implemented in the form of separate lines, respectively, if needed.

A power mode of the hybrid mobile terminal is classified into a full-on mode, a doze mode, and a sleep mode. During the full-on mode, all the internal units of the hybrid mobile terminal are operated at the highest processor speed. During the doze mode, core function units other than a memory controller, an RTC (Real Time Clock), PLL (Phase Locked Loop), and display controllers 12 and 16 are disabled, such that a communication processor module enters a low power standby mode. In the doze mode, a low frequency state can be established. During the sleep mode, all the functions other than the RTC and PLL are interrupted. In this case, the PLL is in an active mode such that the hybrid mobile terminal can be restarted.

If the PDA module 60 enters the full-on mode in the hybrid mobile terminal, data to be displayed on the second display 18 can be transmitted from the mobile phone module 70 to the PDA module 60 according to a predetermined protocol stack between the PDA module 60 and the mobile phone module 70.

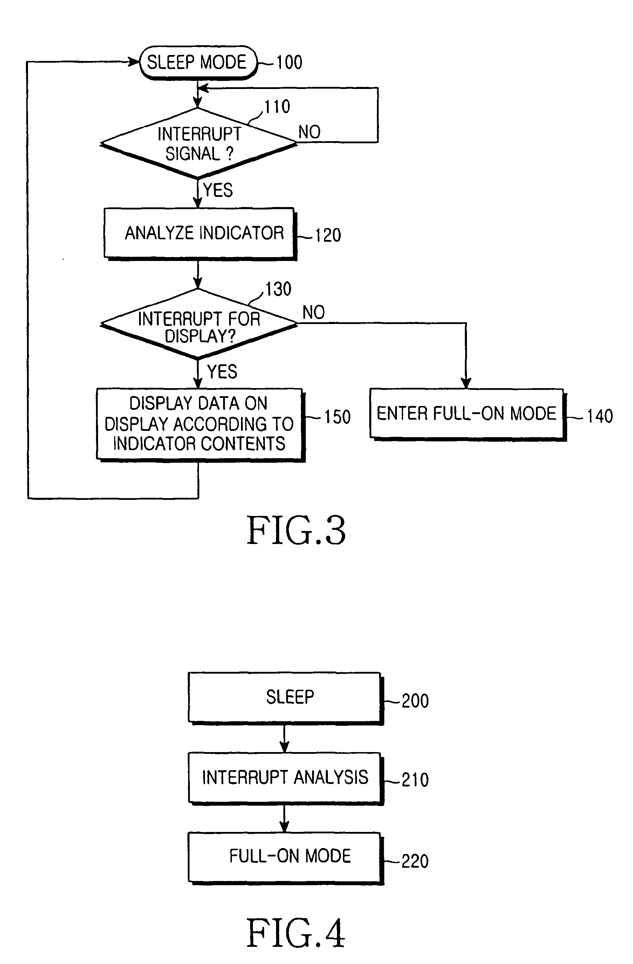

FIG. 4 is a conceptual diagram illustrating an operating process during which the PDA is operated at a full-on state in the sleep mode. The sleep mode 200 and the full-on mode are the same as described above. In the interrupt analysis mode 210 of FIG. 4, only the PDA controller 10 is woken up when an interrupt signal occurs in the sleep mode of the PDA module 60, such that it can analyze a current interrupt. If it is determined that the current interrupt signal is an interrupt signal for displaying data on the display, the PDA controller 10 transmits display data commanded by an indicator of the interrupt signal to the display, such that the display data is displayed on the display. During the interrupt analysis mode 210, all the units including the display are not operated in the same manner as in the sleep mode from the viewpoint of the user. The interrupt analysis mode 210 is a first mode during which the operating system (OS) is not driven, a second mode close to the sleep mode, and other modes similar to the first and second modes.

If the PDA module 60 enters the sleep mode 200, the mobile phone module 70 transmits data to be displayed on the second display 18 of the PDA module 60 to the PDA module 60 using an interrupt signal. More specifically, if the mobile phone module 70 transmits information to the PDA module 60 during the sleep mode of the PDA module 60 using a predetermined protocol established between the PDA module 60 and the mobile phone module 70, the PDA module 60 must enter the full-on mode 220. Data transmission/reception sections contained in the PDA module 60 must be switched on when the PDA module 60 establishes data communication with the mobile phone module 70 using a predetermined protocol. If the data transmission/reception sections contained in the PDA module 60 are switched on, then the PDA module 60 enters the full-on mode.

According to the present invention, if the mobile phone module 70 transmits data to be displayed on the second display 18 to the PDA module 60 during the sleep mode of the PDA module 60, this display data is included in an interrupt signal. If the mobile phone module 70 transmits the display data that is included in an interrupt signal to the PDA module 60, the PDA module 60 does not enter the full-on mode, and is able to display the display data provided from the mobile phone module 70 on the second display 18. More specifically, when the interrupt signal is generated during the sleep mode of the PDA module 60, the PDA module 60 analyzes a corresponding interrupt signal, and determines whether the corresponding interrupt signal includes display data for the second display 18. If the PDA module 60 determines that the corresponding interrupt includes display data for the second display 18, it displays included display data on the second display 18, and re-enters the sleep mode 200. In this case, the display data included in the interrupt signal may be represented by a predetermined indicator. The mobile phone module 70 can transmit display data for the second display 18 to the PDA module 60 using the reserved indicator.

The display data displayed on the second display 18 may be a variety of data, for example, antenna reception sensitivity, remaining battery power, time data, the presence or absence of received SMS message, the presence or absence of a telephone message received in the user's absence, etc. Accordingly, display information displayed on the second display 18 can be represented by 1 or 2 bits. According to the present invention, the mobile phone module 70 transmits the information denoted by 1 or 2 bits to the PDA module 60 using the indicator included in the interrupt signal.

If the mobile phone module 70 transmits display data to be displayed on the second display 18 according to a communication protocol established between the PDA module 60 and the mobile phone module 70, the PDA module 60 must control units for conducting communication protocol related operations to wake up until reaching a specific module for analyzing the communication protocol, resulting in increased battery consumption. The mobile phone module 70 of the present invention does not transmit display data contents to be displayed on the second display 18 using the communication protocol established between the PDA module 60 and the mobile phone module 70, and informs the PDA module 60 of the display data contents at a signal transmission area for a flow-control function in the same way as in the interrupt signal during the sleep mode. The PDA module 60 does not enter the full-on mode 200, rather, it determines the display data contents, updates the display data of the second display 18, and re-enters the sleep mode, resulting in reduced battery consumption. Operations of the PDA module will hereinafter be described with reference to FIG. 3.

FIG. 3 is a flow chart illustrating a procedure for controlling a display using the PDA module in accordance with a preferred embodiment of the present invention. Referring to FIG. 3, the PDA module 60 enters the sleep mode at step 100. The PDA module 60 may automatically enter the sleep mode when a user does not use the PDA module 60, or may also enter the sleep mode upon receiving a control signal from the user. The PDA controller 10 of the PDA module 60 receives the interrupt signal at step 110. The PDA controller 10 analyzes the indicator contained in the interrupt signal at step 120, and determines whether an interrupt signal for a data display function is established at step 130. If display data to be displayed on the second display 16 is included in the interrupt signal, the PDA controller 10 displays the display data on the display at step 150.

However, if it is determined that the interrupt signal for the data display function is not established at step 130, the PDA controller 10 enters the full-on mode at step 140.

As is apparent from the description above, if a PDA module enters a sleep mode, when a hybrid mobile terminal transmits display data received from a mobile phone module to a display controlled by the PDA module using an interrupt signal, the PDA module recognizes display data contained in the interrupt signal, and displays the recognized display data on the display. Therefore, the PDA module can update the display data of the display without entering the full-on mode. Because the PDA module does not enter the full-on mode, battery consumption is reduced.

Although the aforementioned preferred embodiment of the present invention uses an interrupt signal indicator to transmit display data for illustrative purposes, it should be noted that the interrupt signal indicator can also transmit sound data such as an alarm sound.

Although preferred embodiments of the present invention have been disclosed for illustrative purposes, those skilled in the art will appreciate that various modifications, additions, and substitutions are possible, without departing from the scope of the present invention as disclosed in the accompanying claims.

## Claims

1. A hybrid mobile terminal, comprising:
a mobile phone module (70) for inserting display data in an indicator of an interrupt signal and transmitting the interrupt signal including the display data; and
a PDA module (60) including a display (14, 18) for receiving the interrupt signal during a sleep mode, analyzing the indicator included in the interrupt signal, determining whether the analyzed interrupt signal includes the display data, and displaying the display data on said display, if the analyzed interrupt signal includes the display data.

2. The hybrid mobile terminal according to claim 1, wherein the display data comprises at least one of antenna reception sensitivity data, remaining battery power data, time data, SMS data, and telephone message data.

3. The hybrid mobile terminal according to claim 1 or 2, wherein the PDA module is adapted to enter a doze mode, instead of entering a full-on mode, upon receiving the interrupt signal from the mobile phone module, and to display data on the display in the doze mode.

4. A method for controlling a display (14, 18) in a hybrid mobile terminal in which a PDA module (60) including the display is integrated with a mobile phone module (70), comprising the steps of:
the mobile phone module inserting display data in an indicator of an interrupt signal and transmitting the interrupt signal including the display data to the PDA module;
the PDA module analyzing the indicator of the interrupt signal, when the PDA module receives the interrupt signal from the mobile phone module in a sleep mode;
the PDA module determining if the analyzed interrupt signal includes the displaying data; and
the PDA module displaying the display data on the display, if the analyzed interrupt signal includes the display data.

5. The method according to claim 4, wherein the display data includes at least one of antenna reception sensitivity data, remaining battery power data, time data, SMS data, and telephone message data.

6. The method according to claim 4 or 5, wherein the PDA module enters a sleep mode after the display data has been displayed on the display.

## Patentansprüche

1. Hybrid-Mobilendgerät, das umfasst:
ein Mobiltelefon-Modul (70) zum Einfügen von Anzeigedaten in einen Indikator eines Interrupt-Signals und zum Senden des Interrupt-Signals, das die Anzeigedaten enthält; und
ein PDA-Modul (60), das eine Anzeige (14, 18) enthält, zum Empfangen des Interrupt-Signals während eines Sleep-Modus, zum Analysieren des in dem Interrupt-Signal enthaltenen Indikators, zum Bestimmen, ob das analysierte Interrupt-Signal die Anzeigedaten enthält, und zum Anzeigen der Anzeigedaten auf der Anzeige, wenn das analysierte Interrupt-Signal die Anzeigedaten enthält.

2. Hybrid-Mobilendgerät nach Anspruch 1, wobei die Anzeigedaten wenigstens Antennen-Empfangsempfindlichkeitsdaten, Daten über die verbleibende Batterieleistung, Zeitdaten, SMS-Daten oder Telefon-Nachrichtendaten umfassen.

3. Hybrid-Mobilendgerät nach Anspruch 1 oder 2, wobei das PDA-Modul so eingerichtet ist, dass es beim Empfangen des Interrupt-Signals von dem Mobiltelefon-Modul zu einem Doze-Modus übergeht, statt zu einem Full-On-Modus überzugehen.

4. Verfahren zum Steuern einer Anzeige (14, 18) in einem Hybrid-Mobilendgerät, bei dem ein PDA-Modul (60), das die Anzeige enthält, integral mit einem Mobiltelefon-Modul (70) verbunden ist, wobei es die folgenden Schritte umfasst:
Einfügen von Anzeigedaten in einen Indikator eines Interrupt-Signals und Senden des Interrupt-Signals, das die Anzeigedaten enthält, zu dem PDA-Modul durch das Mobiltelefon-Modul;
Analysieren des Indikators des Interrupt-Signals, wenn das PDA-Modul das Interrupt-Signal von dem Mobiltelefon-Modul in einem Sleep-Modus empfängt, durch das PDA-Modul;
Bestimmen, ob das analysierte Interrupt-Signal die Anzeigedaten enthält, durch das PDA-Modul; und
Anzeigen der Anzeigedaten auf der Anzeige, wenn das analysierte Interrupt-Signal die Anzeigedaten enthält, durch das PDA-Modul.

5. Verfahren nach Anspruch 4, wobei die Anzeigedaten wenigstens Antennen-Empfangsempfindlichkeitsdaten, Daten über die verbleibende Batterieleistung, Zeitdaten, SMS-Daten oder Telefonnachrichten-Daten enthalten.

6. Verfahren nach Anspruch 4 oder 5, wobei das PDA-Modul zu einem Sleep-Modus übergeht, nachdem die Anzeigedaten auf der Anzeige angezeigt worden sind.

## Revendications

1. Terminal mobile hybride comprenant :
un module de téléphonie mobile (70) destiné à insérer des données à afficher dans un indicateur d'un signal d'interruption et à émettre le signal d'interruption comprenant les données à afficher ; et
un module PDA (pour « *Personal Digital Assistant* » - Assistant numérique personnel) (60) comprenant un écran d'affichage (14, 18), destiné à recevoir un signal d'interruption dans un mode de sommeil, à analyser l'indicateur inclus dans le signal d'interruption, à déterminer si le signal d'interruption analysé contient les données à afficher et à afficher les données à afficher sur ledit écran d'affichage, si le signal d'interruption analysé inclut les données à afficher.

2. Terminal mobile hybride selon la revendication 1, dans lequel les données à afficher comprennent au moins une des données suivantes : données de sensibilité de réception de l'antenne, données de capacité résiduelle de la batterie, données d'heure, données de SMS et données de message téléphonique.

3. Terminal mobile hybride selon la revendication 1 ou 2, dans lequel le module PDA est adapté pour entrer dans un mode de demi-réveil, au lieu d'entrer dans un mode de réveil complet, après réception du signal d'interruption du module de téléphonie mobile et pour afficher les données sur l'écran d'affichage dans le mode de demi-réveil.

4. Procédé de commande d'un écran d'affichage (14, 18) sur un terminal mobile hybride dans lequel un module PDA (60) comprenant l'écran d'affichage est intégré avec un module de téléphonie mobile (70), comprenant les étapes consistant à ce que :
le module de téléphonie mobile insère des données à afficher dans un indicateur d'un signal d'interruption et transmette le signal d'interruption comprenant les données à afficher au module PDA ;
le module PDA analyse l'indicateur du signal d'interruption, lorsque le module PDA reçoit le signal d'interruption du module de téléphonie mobile, dans un mode de sommeil ;
le module PDA détermine si le signal d'interruption analysé contient les données à afficher ; et
le module PDA affiche les données à afficher sur l'écran d'affichage, si le signal d'interruption analysé inclut les données à afficher.

5. Procédé selon la revendication 4, dans lequel les données à afficher comprennent au moins une des données suivantes : données de sensibilité de réception de l'antenne, données de capacité résiduelle de la batterie, données d'heure, données de SMS et données de message téléphonique.

6. Procédé selon la revendication 4 ou 5, dans lequel le module PDA entre dans un mode de sommeil après que les données à afficher ont été affichées sur l'écran d'affichage.
